# EUROPÄISCHE PATENTSCHRIFT

(11) **EP 0 691 484 B1**
(45) Veröffentlichungstag und Bekanntmachung des Hinweises auf die Patenterteilung: **10.01.2001**
(21) Anmeldenummer: 95112857.8
(22) Anmeldetag: 27.10.1988
(51) Int. Cl.: F16D 1/10, E21B 17/046

(54) **Kupplung für Bohrgestänge mit Kraftübertragung auf eine Bohrkrone**
Force transmitting coupling for a tube shaft to an annular drill bit
Accouplement pour tiges de forage avec transmission de force sur une couronne de sondage diamantée

(30) Priorität: 27.10.1987 DE 3736302; 21.04.1988 DE 3813472
(43) Veröffentlichungstag der Anmeldung: 10.01.1996
(62) Teilanmeldung aus: 88117893.3
(73) Patentinhaber: Geissler & Kuper Gesellschaft mit beschränkter Haftung Diamantwerkzeuge, Maschinen, D-29227 Celle (DE)
(72) Erfinder: Geissler, Bernd, D-29358 Eicklingen (DE)
(74) Vertreter: Einsel, Robert, Dipl.-Ing.

(56) Entgegenhaltungen:
- EP-A- 0 235 581
- DE-U- 8 627 861
- GB-A- 2 065 759
- US-A- 4 072 441

## Beschreibung

Die Erfindung betrifft eine Kupplung, bestehend aus zwei zu kuppelnden Kupplungsteilen eines Bohrgestänges mit Kraftübertragung von einer Bohrmaschine auf ein Schaftrohr mit Bohrkrone. Solche Bohrkronen sind bekannt. Sie bestehen im Prinzip aus einem Rohr mit an einer Stirnseite kronenartig befestigten Diamanten, Hartmetallen oder dergleichen. Sie werden insbesondere zum Bohren in Gestein und Beton verwendet. Je nach Anwendungsbereich werden sie im Naß- oder Trockenverfahren betrieben.

Es ist eine Kupplung für Gestänge mit Diamantbohrkronen mit Schaftrohr und Rohrgewindeanschluß bekannt, bei der jedes Kupplungsteil eine senkrecht zur Achse angeordnete Stirnfläche hat und bei der die beiden Stirnflächen zur Erzielung einer dichten und kraftschlüssigen Verbindung fest zusammengedrückt werden. (DE-OS 86 03 499).

Diese bekannte Kupplung hat sich zwar für den Bohrbetrieb bewährt, hat aber wegen der für die Festigkeit der Verbindung und die Kraftschlüssigkeit notwendigen hochfesten und korrosionsstabilen Materialien ein relativ hohes Eigengewicht.

Es ist auch bekannt (US-PS 4,072,441), bei Lochsägen auf einem Spiralbohrer mittels einer Klemmschraube einen Kunststoffsockel zu befestigen, auf den das Sägeblatt eingeschnappt wird. Mit dieser bekannten Anordnung ist keine wesentliche Kraftübertragung möglich.

Der Erfindung liegt die Aufgabe zugrunde, eine Anordnung zu schaffen, die mit leichter Kupplungsanordnung eine schnelle, einfache Verbindung der Gestängeteile ermöglicht und die den Bohrvorgang nicht unerwünscht beeinflußt.

Diese Aufgabe wird bei einer Kupplung nach dem Oberbegriff des Anspruchs 1 durch die im Kennzeichen des Anspruchs 1 gekennzeichnete Erfindung gelöst.

Weiterbildungen der Erfindung sind in den abhängigen Ansprüchen gekennzeichnet.

Zur näheren Erläuterung der Erfindung werden im folgenden Ausführungsbeispiele anhand der Zeichnungen beschrieben. Diese zeigen in
- Fig. 1: eine perspektivische Ansicht einer Diamantbohrkrone mit Schaftrohr und einer Kupplung zum Rohrgewindeanschluß,
- Fig. 2: eine geschnittene Seitenansicht der miteinander verbundenen Teile gemäß Fig. 1,
- Fig. 3: eine teilweise geschnittene Seitenansicht eines mit Nuten versehenen Kupplungsstückes,
- Fig. 4: eine andere Seitenansicht der zu kuppelnden Teile,
- Fig. 5: eine Kupplung mit Vertiefungen in dem mit Nuten versehenen Kupplungsstück,
- Fig. 6: ein Schaftrohr mit Schraubabschluß,
- Fig. 7: eine Weiterbildung der Kupplung.

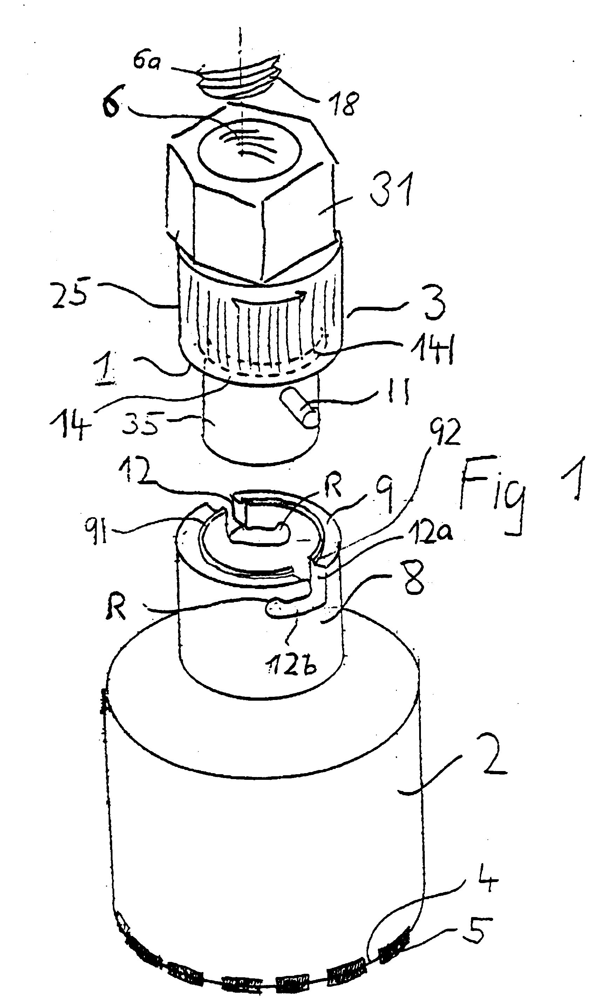

In Fig. 1 ist in perspektivischer Darstellung eine Diamantbohrkrone 1 mit einem Schaftrohr 2 und einem Rohrgewindeanschluß 3 gezeigt. Das Schaftrohr 2 ist an seiner einen Stirnseite 4 kronenartig mit Diamanten 5 versehen. Diese Diamanten können als Stücke eingesetzt oder verlötet oder als Beimengung zu einer erhärtenden, die Stirnseite des Schaftrohres bildenden Füllmasse vorgesehen werden. Die Stirnseite kann mit Einschnitten für den Wasserdurchtritt versehen sein. Außerdem kann das Schaftrohr noch mit Öffnungen 7 versehen sein. An der anderen Stirnseite ist das Schaftrohr 2 mit einem Ansatz 8 versehen, der ein erstes Kupplungsteil bildet. Dieser Ansatz ist so ausgebildet, daß er der Flüssigkeit den Durchlauf in das Schaftrohr erlaubt. An der dem Schaftrohr 2 abgewandten Seite des Ansatzes 8 ist eine Fläche 9 vorgesehen, die im wesentlichen senkrecht zur Achse des Schaftrohres 2 angeordnet ist. In der im wesentlichen zylindrischen Wandung des Ansatzes 8 sind diametral gegenüberliegend Nuten 12 angeordnet. Der Rohrgewindeanschluß 3 ist ebenfalls mit einem im wesentlichen zylindrischen Ansatzteil 35 versehen, das als zweites Kupplungsteil dient. Aus diesem Teil 35 ragen senkrecht zur Achsrichtung des Schaftrohres 2 Vorsprünge 11, z.B. Bolzen hervor. Diese Vorsprünge 11 wirken zusammen mit den Nuten 12. Das zylindrische Teil 35 hat einen so bemessenen Außendurchmesser, und der Ansatz 8 einen so bemessenen Innendurchmesser, daß das Teil 35 in den Ansatz 8 hineingeschoben werden kann. Die Nuten 12 und die Vorsprünge 11 sind so bemessen, daß die Vorsprünge in die Nuten 12 eingreifen können und von diesen geführt werden . Die Außenwandung des Teiles 35 und die Innenwandung sind gegeneinander abgedichtet, beispielsweise durch einen O-Ring 16 in einer ringförmigen Nut 17. Auf diese Weise wird die Verbindung von Schaftrohr 2 und Rohrgewindeanschluß 3 gegen den Austritt der Kühlflüssigkeit abgedichtet.

Das Schaftrohr 2 und der Rohrgewindeanschluß 3 bilden praktisch ein erstes und ein zweites Kupplungsteil, die beide durch die Vorsprünge 11 und die Nuten 12 leicht kuppelbar sind. Die Kupplung 2,3 ist dabei so beschaffen, daß die beiden Teile 2,3 bei ihrer Verbindung zugleich durch die zwischen ihnen angeordnete Dichtung 16 abgedichtet werden. Für die Erleichterung der Kupplung weisen die Nuten im Teil 8 einen zunächst etwa in Achsrichtung verlaufenden Führungsteil 12b auf. Die Richtung von Teil 12b ist so gewählt, daß die Nutwandung bei der Drehung der zu kuppelnden Teile 2,3 den Vorsprung 11 in Richtung auf eine Raste R führt. Die Raste R verhindert, daß sich die beiden so zusammengefügten Teile 2,3 ohne erneute rückläufige Drehung der Teile wieder lösen können. Wenn beispielsweise der Rohrgewindeanschluß 3 ortsfest aufgehängt ist, kann das oft sehr schwere Schaftrohr 2 zur Kupplung angehoben und lose in die Kupplung 3 eingehängt werden. In gleicher Weise können die locker gelösten Kupplungsteile nicht auseinanderfallen, sondern werden besonders aus der Verbindung herausgehoben und abgesenkt. Beim Zusammensetzen der Kupplungsteile 2,3 am Schaftrohr 2 und am Rohrgewindeansatz 3 werden zunächst der Ansatz 8 und das Teil 35 so ineinandergesteckt, daß daß der oder die Vorsprünge 11 in die Nutenteile 12 a eingreifen. Anschließend werden das Schaftrohr 2 und das Teil 3 oder 35 so gegeneinander verdreht, daß sich die Vorsprünge 11 entlang der Nutenteile 12b bewegen, bis sie als Endlage die Raste R erreichen. Die Raste R wird durch eine Ausdehnung der Nute 12b in Achsrichtung erzielt, vorzugsweise un Richtung auf die Fläche 9. Zur Vollendung der Kupplung ist auf dem Rohrgewindeanschlußteil 3 ein Klemmring 25 so verschiebbar, daß er den Vorsprung 11 fest in die Raste R zieht. Zur Verschiebung ist das Teil 3 mit einem Außengewinde und der Ring 25 mit einem Innengewinde versehen. Die einander zugewandten Flächen 9 des Ansatzes 8 und 14 des Klemmrings 25 sind so angeordnet und bemessen, daß sie fest gegeneinander gedrückt werden und ihre Verbindung abdichten. Es ist aber auch möglich, ein Kupplungsteil ständig am Bohrgerät zu belassen und nur die diversen Schaftrohre auszuwechseln bzw. anzukuppeln. Die so geschaffene kompakte und dichte Einheit wird in bekannter Weise mit dem Gewindeanschluß 18 des nur angedeuteten Bohrgerätes 19 verbunden. Nach dem Gebrauch werden das Schaftrohr 2 und der Rohrgewindeanschluß wieder voneinander durch Drehung der Teile getrennt. Die Trennung erfordert keine Werkzeuge. Zur Erleichterung der Trennung von evtl. stärker verklemmten Teilen kann die Außenseite des Teiles 25 gerändelt sein oder andere Grifferleichterungen aufweisen. Außerdem kann eine Einfräsung F zum Ansetzen von Werkzeugen vorgesehen sein.

Am Innenrand der Fläche 9 sind Vorsprünge 91 in Richtung auf das andere Kupplungsteil angeordnet. Im Klemmring 25 ist der Innenbereich 141 neben der Fläche 14 so geformt oder abgedreht, daß die Vorsprünge 91 in den Klemmring eintauchen können wenn dieser zur Verklemmung der Flächen 9, 14 bzw. der Bolzen 11 in den Nuten 12 auf den Ansatz 8 zu verdreht wird. Dabei soll zwischen den Vorsprüngen 91 und der Wandung 142 des Bereichs 141 gerade soviel Distanz bleiben, daß die Flächen 141 und 92 sich nicht ohne weiteres berühren. Dadurch wird erreicht, daß die Flächen 141 und 92 nicht zur Zentrierung der Kupplungsteile 2, 3 beitragen und diese auch nicht ungünstig beeinflussen können, was beispielsweise geschehen könnte, wenn die beiden Teile nicht mehr genau in Achsrichtung fluchten würden durch den Einfluß der beiden Wandungen 92, 142.

Die Vorsprünge 91 und die entsprechende Form 141 im Klemmring ermöglichen eine geringere Festigkeit der verwendeten Materialien und Abmessungen. Es wird dadurch möglich, statt eines hochfesten Stahls Keramik oder Kunststoff, beispielsweise glasfaserverstärkten Kunststoff GFK oder ein Polyamid der Typen PA 6 oder PA 6,6 oder einen polykristallinen Kunststoff zu verwenden. Vorzugsweise wird ein Kunststoff eingesetzt, wie er bereits als Lagerwerkstoff Verwendung findet. Das sind Kunststoffe, die wenig Wasser aufnehmen und leicht bearbeitbar sind. Während des Betriebes werden über die Kupplung hohe Kräfte übertragen. Dabei können Kräfte eine Verformung des Materials bewirken, beispielsweise radial, in Richtung der Nute 12 b oder in Richtung auf das andere Kupplungsteil. Durch die beiden Klemmflächen 9 und 14 werden Verformungen in Richtung auf das andere Kupplungsteil verhindert, da die beiden Flächen unter großem Druck gegeneinander gepreßt werden. Eine Verformung in Richtung der Nute 12b oder in radialer Richtung wird durch die Zusammenwirkung der Vorsprünge 91 un d 141 unterbunden, wenn die Verformungen ein vorbestimmtes Maß übersteigen. Dann nämlich liegen die beiden Wandungen gegeneinander.

Um die Wirksamkeit der gegeneinander gedrückten Stirnflächen 9 und 14 zu erhöhen, werden diese Flächen so groß wie möglich gemacht. Zu diesem Zweck wird der Außendurchmesser des Klemmrings 25 im Bereich der Fläche 14 größer bemessen als es der Dicke dieses Klemmrings entspricht..

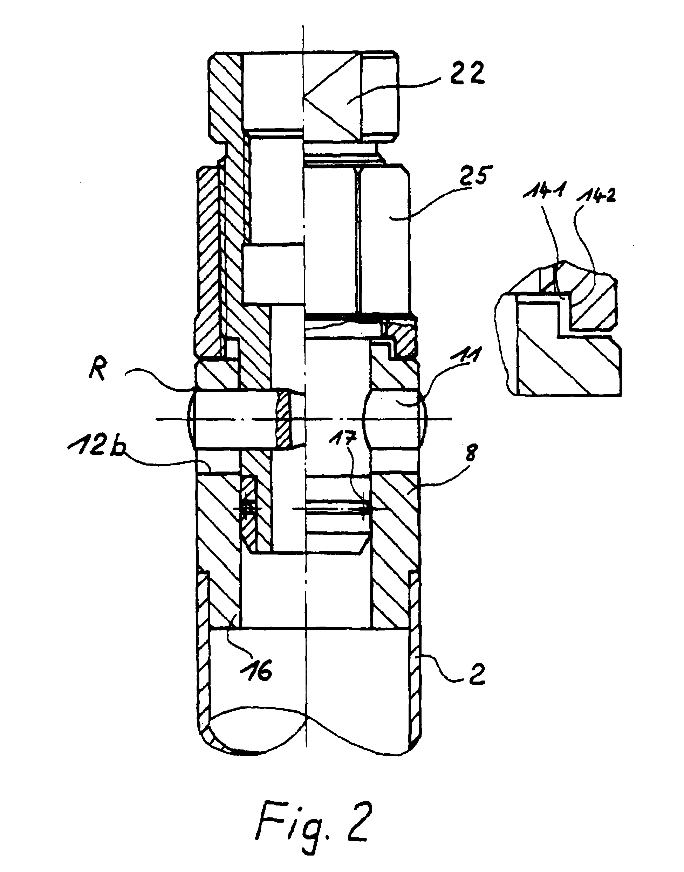

In Fig. 2 ist die geschnittene Seitenansicht eines Schaftrohres 2 mit dem an einem Ende eingesetzten Ansatz 8 und dem angekuppelten Rohrgewindeanschlußteil 3 dargestellt. Deutlich sichtbar ist die Dichtung 16 zwischen dem Ansatz 8 und dem Ansatzteil 35.

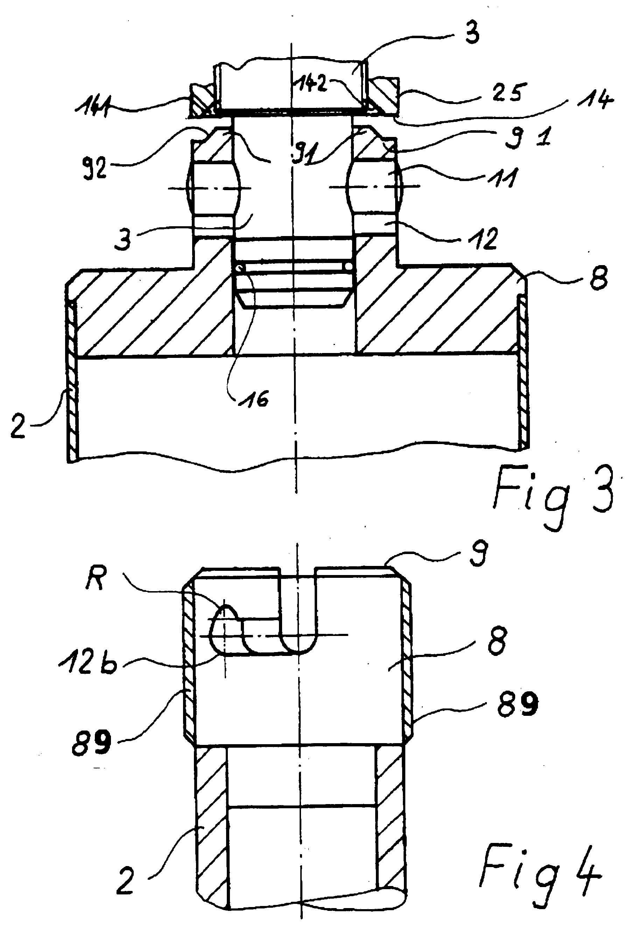

Fig. 3 zeigt die geschnittene Seitenansicht einer Kupplung. Abweichend von der in Fig. 2 dargestellten Kupplung ist hier der Vorsprung 91 mit einem etwa trapezförmigen Profil ausgebildet.

In Fig. 4 ist eine Weiterbildung der Kupplungen nach Fig. 1 - Fig. 3 für die Übertragung besonders großer Kräfte dargestellt. Bei dieser Weiterbildung ist der Kunststoffkörper 8 von einer dünnen, die Haltbarkeit steigernden Metallhülse 81 umgeben, die aufgeschrumpft und/oder aufgeklebt ist.

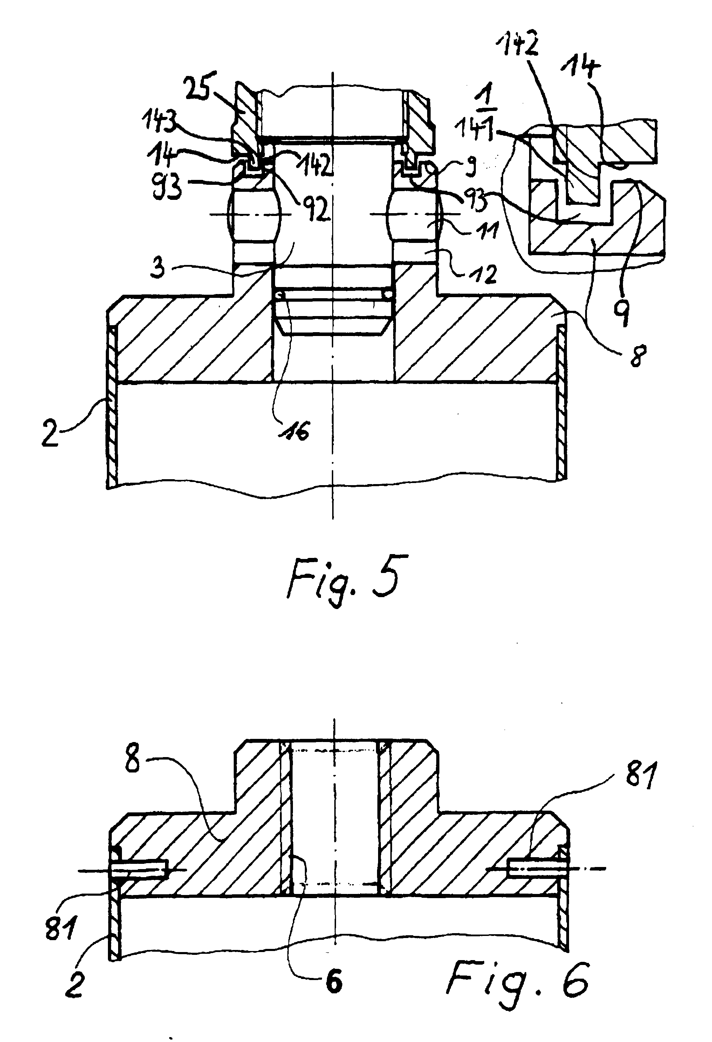

Fig. 5 zeigt eine Kupplung mit Vertiefungen 93 in dem die Nuten tragenden Kupplungsstück 8. Diese Vertiefungen können rechteckförmig oder trapezförmig ausgebildet sein und als einzelne Vertiefungen oder als Nuten ausgebildet sein. Nuten haben sich als besonders geeignet erwiesen. In die Nuten 93 greifen gratförmige Vorsprünge 144 des Klemmrings 25 ein. Auch hier ist dafür Sorge getragen, daß die Wandungen der Vorsprünge und Nuten sich ohne zusätzliche Verformungen nach der Verkupplung nicht berühren.

Die vorstehend anhand der Figuren beschriebene Kupplung kann als Teil der Gestängerohre verwendet werden. Die Kupplungsteile können aber auch als gesonderte Bauteile vielseitig eingesetzt werden.

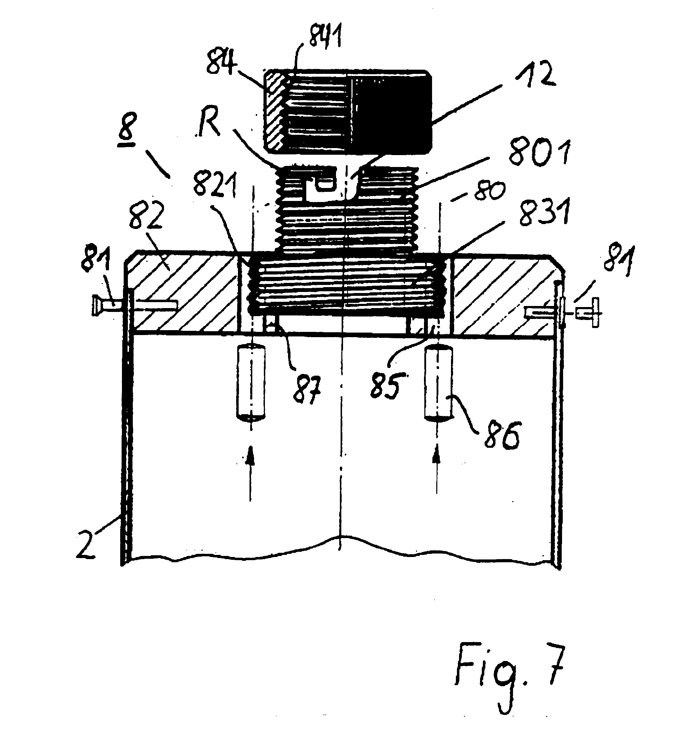

In Fig. 6 ist ein Schaftrohr 2 mit einem Kupplungsstück 8 dargestellt, das in das Schaftrohr 2 eingepaßt, mit diesem mittels eines hochfesten Klebers verklebt und zusätzlich mittels Nieten 81, Schrauben oder dergleichen verbunden ist. Das Kupplungsteil 8 ist mit einem Gewinde 82 versehen, das zur Aufnahme üblicher Rohranschlußgewindeteile ausgebildet ist.

Die Verwendung der Kupplungsteile aus Kunststoff führt zu einer wesentlichen Verringerung der Bohrgeräusche.

In Fig. 7 ist ein Ausführungsbeispiel der Kupplung 8 dargestellt, bei dem ein Kupplungsteil 82 im wesentlichen scheibenförmig ausgebildet und durch Aufschrumpfen und/oder Kleben und/oder Vernieten oder Verschrauben mit dem Gestänge 2 fest verbunden ist. Gestänge 2 unterschiedlicher Durchmesser sind mit entsprechend angepaßten Kupplungsteilen 82 versehen. Im Kupplungsteil 82 ist eine zum Gestänge koaxiale Bohrung mit Innengewinde 821 vorgesehen. In diese Gewindebohrung 821 ist ein rohrförmiges Kupplungsteil 80 einschraubbar und mittels eines Anschlages 87 und/oder durch Bohrungen 85 und Bolzen 86 arretierbar. Die Bohrungen 85 durchdringen sowohl die Gewindebohrung 821 als auch das Kupplungsstück 80. Das Gewinde der Gewindebohrung ist relativ steil und grob, um ein Festfressen während des Betriebes mit großer Kraftübertragung zu vermeiden.

Das rohrförmige Kupplungsstück 80 ragt mit einem Teil seiner Länge über den stimseitigen Abschluß des Gestängeteils 2 hinaus und ist in diesem Bereich mit dem Kupplungsteil 3 aus Fig 1 kuppelbar. Das Kupplungsstück 80 ist mit Nuten 12 und ggf mit einer Raststellung R für die Aufnahme des Kupplungsteiles 3 mit seinen Vorsprüngen 11 versehen. Um eine Verformung des durch die Nuten 12 oder dergl geschwächten Randbereichs des Kupplungsstückes zu vermeiden, ist die Außenseite des Kupplungsstückes 80 wenigstens im Bereich der Nuten 12 mit einem Gewinde 801 versehen, auf das ein Ring 84 mit entsprechendem Innengewinde 841 aufschraubbar ist. Dieser Ring 84 gibt dadurch jeder Windung des Gewindes 801 Halt und bewirkt eine Stabilisierung des Randbereichs. Der Durchmesser des Ringes 84 ist so gewählt, daß er über die bereits eingebaute Kupplung 3 geführt werden kann.

Die Teile 80, 801, 82, 83 sowie der Ring 84 in Fig. 7 sind aus einem Kunststoff, insbesondere aus einem Gußpolyamid PA 6 oder PA 6,6 gefertigt. Durch kegelförmige Ausbildung der Gewinde 801 und 841 läßt sich die Verbindung der Teile vereinfachen und das Auswechselverfahren beschleunigen. Die Bolzen 11 und 86 sind vorzugsweise aus Metall gefertigt. Die Verbindungsstifte 81 können Schrauben oder Nieten sein. Vor der Verbindung der Teile 2 und 82 wird das Gestängeteil 2 erhitzt und das Abschlußteil 82 gekühlt. Nach dem Aufschrumpfen ggf in Verbindung mit einem Verkleben der benachbarten Flächen und den genannten Nieten 81 kann diese Verbindung auch sehr hohe Kräfte übertragen.

Bei einer bevorzugten Ausführungsform der Kupplung sind die für das Kuppeln wirksamen Teile aus Kunststoff, insbesondere der vorstehend genannten Materialien gefertigt. Lediglich für das mit den Schneidelementen versehene Rohr 2 und für die Bolzen 11 haben sich Metalle bewährt. Ein wesentlicher Teil der dadurch bewirkten Vorteile wie Geräuschverringerung und Gewichtsersparnis sowie die beim Betrieb damit verbundene Sicherheit wird durch die in das Rohr 2 eingesetzte Scheibe 8 bzw 82 aus Kunststoff erzielt, die insbesondere bei großen Durchmessern der Rohre 2 zu einer stabilen Lage des Werkzeugs beim Bohren beiträgt.

## Patentansprüche

1. Kupplung bestehend aus zwei zu kuppelnden Kupplungsteilen (3,8) eines Bohrgestänges mit Kraftübertragung von einer Bohrmaschine auf ein Schaftrohr (2) mit Bohrkrone, **dadurch gekennzeichnet, daß** das eine, Nuten aufweisende Kupplungsteil (8) und das eine, Vorsprünge (11) aufweisende Kupplungsstück (3) gegeneinander abgedichtet sind, daß das eine, Nuten aufweisende Kupplungsteil (8) und/oder das eine, Vorsprünge (11) aufweisende Kupplungsstück (3) und/oder das mit dem die Bohrkrone tragenden Rohr (2) an dem der Bohrkrone abgewandten Ende zu einer Einheit verbundene Kupplungsteil (8) und/oder ein die Kupplungsteile (3,8) kraftschlüssig verbindender Klemmring (25) aus einem leichten Nichteisenmaterial besteht.

2. Kupplung nach Anspruch 1, dadurch gekennzeichnet, daß das Material Kunststoff ist.

3. Kupplung nach Anspruch 1, dadurch gekennzeichnet, daß das Material ein glasfaserverstärkter Kunststoff ist.

4. Kupplung nach Anspruch 1, dadurch gekennzeichnet, daß das Material ein Polyamid ist.

5. Kupplung nach Anspruch 1, dadurch gekennzeichnet, daß das Material polykristallin ist.

6. Kupplung nach Anspruch 1, dadurch gekennzeichnet, daß die Kupplungsteile (3,8) durch den Klemmring (25) miteinander kraftschlüssig verbindbar sind.

7. Kupplung nach einem der Ansprüche 1 - 6, dadurch gekennzeichnet, daß Rohr (2) und Kupplungsteil (8) mittels eines Klebers verbunden sind.

8. Kupplung nach einem der Ansprüche 1 - 7, dadurch gekennzeichnet, daß Rohr (2) und Kupplungsteil (8) durch Aufschrumpfen verbunden sind.

9. Kupplung nach einem der Ansprüche 1 - 8, dadurch gekennzeichnet, daß Rohr (2) und Kupplungsteil (8) durch Nieten miteinander verbunden sind.

10. Kupplung nach Anspruch 4, dadurch gekennzeichnet, daß das Material ein Gußpolyamid der Type PA6 oder PA 6,6 ist.

## Claims

1. Coupling comprising two connectable coupling parts (3, 8) of a drill column with power transmission from a drilling machine to a shank pipe (2) with annular bit, **characterized in that** the one coupling part (8) having slots and the one coupling piece (3) having projections (11) are sealed against one another, that the one coupling part (8) having slots and/or the one coupling piece (3) having projections (11) and/or the coupling part (8), which is connected to the pipe (2) carrying the annular bit at the end remote from the annular bit to form a unit, and/or a clamping ring (25) frictionally connecting the coupling parts (3, 8) is made of a light nonferrous material.

2. Coupling according to claim 1, characterized in that the material is plastics material.

3. Coupling according to claim , characterized in that the material is a glass-fibre-reinforced plastics material.

4. Coupling according to claim 1, characterized in that the material is a polyamide.

5. Coupling according to claim 1, characterized in that the material is polycrystalline.

6. Coupling according to claim 1, characterized in that the coupling parts (3, 8) are frictionally connectable to one another by the clamping ring (25).

7. Coupling according to one of claims 1 - 6, characterized in that pipe (2) and coupling part (8) are connected by means of an adhesive.

8. Coupling according to one of claims 1 - 7, characterized in that pipe (2) and coupling part (8) are connected by shrinking on.

9. Coupling according to one of claims 1 - 8, characterized in that pipe (2) and coupling part (8) are connected to one another by rivets.

10. Coupling according to claim 4, characterized in that the material is a casting polyamide of the type PA6 or PA 6.6.

## Revendications

1. Accouplement composé de deux éléments d'accouplement à accoupler (3, 8) d'une tige de forage avec transmission des forces d'une machine de forage à un tube de jonction (2) avec couronne de forage, caractérisé en ce que l'élément d'accouplement (8) pourvu de rainures et l'élément d'accouplement (3) pourvu d'éléments faisant saillie (11) sont réciproquement étanchéifiés, en ce que l'élément d'accouplement (8) pourvu de rainures et/ou l'élément d'accouplement (3) pourvu d'éléments faisant saillie (11) et/ou l'élément d'accouplement (8) pourvu du tube (2) supportant la couronne de forage relié en une unité en l'extrémité opposée à la couronne de forage et/ou un anneau de serrage (25) reliant les éléments d'accouplement (3, 8) par engagement positif sont fabriqués dans un matériau léger non ferreux.

2. Accouplement selon la revendication 1, caractérisé en ce que le matériau est un plastique.

3. Accouplement selon la revendication 1, caractérisé en ce que le matériau est un plastique renforcé par des fibres de verre.

4. Accouplement selon la revendication 1, caractérisé en ce que le matériau est un polyamide.

5. Accouplement selon la revendication 1, caractérisé en ce que le matériau est polycristallin.

6. Accouplement selon la revendication 1, caractérisé en ce que les éléments d'accouplement (3, 8) peuvent être reliés entre eux par engagement positif au moyen de l'anneau de serrage (25).

7. Accouplement selon l'une des revendications 1 à 6, caractérisé en ce que le tube (2) et l'élément d'accouplement (8) sont reliés au moyen d'une colle.

8. Accouplement selon l'une des revendications 1 à 7, caractérisé en ce que le tube (2) et l'élément d'accouplement (8) sont reliés par frettage.

9. Accouplement selon l'une des revendications 1 à 8, caractérisé en ce que le tube (2) et l'élément d'accouplement (8) sont reliés entre eux par rivetage.

10. Accouplement selon la revendication 4, caractérisé en ce que le matériau est un polyamide de moulage de type PA6 ou PA 6,6.
